# EUROPEAN PATENT APPLICATION

(11) **EP 3 496 050 A1**
(43) Date of publication of application: **12.06.2019**
(21) Application number: 17465587.8
(22) Date of filing: 07.12.2017
(51) Int. Cl.: G07C 5/06, G07C 7/00

(54) **TACHOGRAPH AND METHOD FOR OPERATING A TACHOGRAPH**

(71) Applicant: Continental Automotive GmbH, 30165 Hannover (DE)
(72) Inventor: Tileaga, Viorel, 300629 Timisoara (RO); Stan, Silviu, 300716 Timisoara (RO); Hug, Klaus, 78727 Oberndorf (DE)

(57) **Abstract**

A tachograph (800) comprises a detection unit (100) and a printing unit (600) . The tachograph (800) is configured to detect at least one parameter. The detection unit (100) is configured to detect a continuous line (200) that is pre-printed on a paper of a paper roll (300) . The printing unit (600) is configured to print a graph (A) representing the at least one parameter, wherein the graph (A) is printed at a distance (dx) from the continuous line (200), and wherein the distance (dx) depends on the at least one parameter.

## Description

The present invention relates to a tachograph and a method for operating a tachograph, in particular a tachograph with a printing unit.

A tachograph is a device that is arranged in a vehicle and that is configured to automatically record vehicle data such as vehicle speed and travelled distance, for example. Further, tachographs may also record the driver's activity, such as driving or resting, for example. The collected data is usually detected by different sensors within the vehicle. The data is stored in a memory unit of the tachograph and may be read out at a later time. Tachographs are usually mandatory for trucks and busses.

The stored data may be read out by means of special read-out devices in a garage or at the headquarters of the trucking or bus company, for example. However, the regulations of some countries require tachographs that include a printing unit. In this way, the collected data may be printed directly from the tachograph. Paper rolls are used for printing the data. On the paper rolls certain patterns may be pre-printed and a graph representing the collected data is printed on the pattern. However, the paper may be displaced during printing. As a result, the printed graphs may be misleading and may show incorrect data. This may have severe consequences for a driver or a truck company.

The problem to be solved by the present invention is to provide an improved tachograph and a method for operating a tachograph which reduce the risk of printing erroneous data.

This problem is solved by a tachograph according to claim 1 and a method according to claim 10. Configurations and further developments of the invention are the subject of the dependent claims.

A tachograph comprises a detection unit and a printing unit. The tachograph is configured to detect at least one parameter, the detection unit is configured to detect a continuous line that is pre-printed on a paper of a paper roll and the printing unit is configured to print a graph representing the at least one parameter, wherein the graph is printed at a distance from the continuous line, and wherein the distance depends on the at least one parameter.

In this way, the graph representing the at least one parameter may be printed within the allowed tolerances, thereby accurately reproducing the at least one parameter.

The tachograph may be mounted on a vehicle, and the at least one parameter may relate to vehicle data. For example, the vehicle data may comprise at least one of a vehicle speed, a travelled distance, and a travelling time. These are usually the most important parameters detected by the tachograph.

The detection unit may comprise an external housing. The external housing may house several different components.

For example, the detection unit may further comprise a photo array sensor that is arranged within the external housing. The photo array sensor may be configured to detect light that is reflected by the paper and the continuous line printed thereon. This is an easy way to detect structures that are printed on paper.

The detection unit may further comprise a lens array. The lens array may be arranged in the external housing. When a paper roll with a continuous line printed thereon is inserted in the tachograph, the lens array may be arranged between the continuous line and the photo array sensor. In this way, the lens array may focus the light that is reflected by the paper and the continuous line printed thereon. This may further increase the accuracy of the detection unit.

The detection unit may further comprise at least one LED arranged in the external housing. The at least one LED may be configured to provide light that is reflected by the paper and the continuous line.

The detection unit may further comprise a protective lens arranged at one side of the external housing. The protective lens may be configured to protect the inside of the external housing from contaminations. This protects the components arranged inside the external housing from contaminations, e.g., from dust. This may help to increase the lifetime of the detection unit.

The detection unit may further comprise a flexible foil. The flexible foil may be configured to provide an electrical connection between different components of the detection unit

A method for operating a tachograph comprises detecting at least one parameter, detecting a continuous line that is pre-printed on a paper of a paper roll, and printing a graph representing the at least one parameter, wherein the graph is printed at a distance from the continuous line, wherein the distance depends on the at least one parameter.

Examples are now explained with reference to the drawings. In the drawings the same reference characters denote like features.
Figure 1 schematically illustrates an example of a section of a paper roll with a pre-printed pattern.
Figure 2 schematically illustrates a further example of a section of a paper roll with pre-printed patterns.
Figure 3 exemplarily illustrates a further example of a section of a paper roll with a pre-printed pattern.
Figure 4 exemplarily illustrates a paper roll and a detection unit according to the present invention.
Figure 5 exemplarily illustrates a detection unit according to the present invention.
Figure 6 exemplarily illustrates a cross section of a detection unit according to the present invention.
Figure 7 exemplarily illustrates an exploded view of a detection unit according to the present invention.
Figure 8 exemplarily illustrates a side view of a tachograph with a detection unit according to the present invention.
Figure 9 exemplarily illustrates in a block diagram a tachograph according to one example of the present invention.

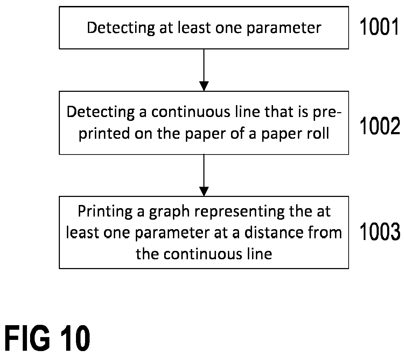

Figure 10 exemplarily illustrates in a flow diagram a method according to the present invention.

Tachographs are devices that are mounted in vehicles to fully automatically or semi-automatically display, record, print and store data concerning the trips of a vehicle such as a truck or a bus, for example. The data may concern the speed of the vehicle, the travelled distance as well as information concerning the activity and activity hours of the driver. Drivers of trucks, for example, are usually only allowed to drive for a certain time and have to adhere to specified resting periods afterwards. Tachographs, therefore, need to precisely and reliably determine the respective data.

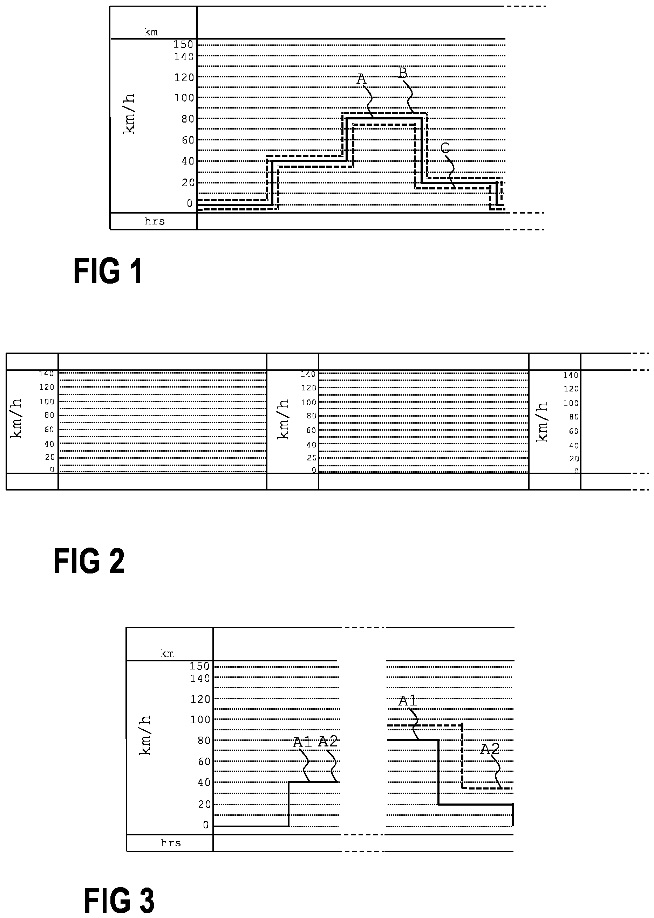

The regulations of some countries, such as Brazil, for example, require that tachographs include a printing unit. The printing unit allows to directly print the recorded data at any time. A paper roll is inserted in the tachograph. On the paper roll, patterns may be pre-printed and a graph representing the recorded data may be printed on the pre-printed patterns. This is exemplarily illustrated in Figure 1. The pre-printed pattern includes horizontal lines, for example. Each horizontal line may represent a certain speed. In Figure 1, horizontal lines are illustrated which each represent a speed between 0km/h and 150km/h, e.g., 0km/h, 20km/h, 40km/h, 60km/h, 80km/h, 100km/h, 120km/h, 140km/h, 150km/h.

A graph A representing the recorded speed is printed on the pattern. For example, the vehicle remained stationary at a speed of 0km/h for a certain time. Afterwards, the vehicle moved at a constant speed of 40km/h, followed by a period of a constant speed of 80km/h. The vehicle then moved at a speed of 20km/h for a certain time before coming to a halt again. In the example of Figure 1, the vehicle moved at a maximum speed of 80km/h. The vehicle may be allowed to move at a maximum of 80km/h, but may not be allowed to move at a speed that exceeds 80km/h.

However, while printing the graph A, the paper may shift in the printer. Therefore, the graph may be printed in a wrong location of the pre-printed pattern. For example, if the paper shifts by a certain distance, the graph may be erroneously printed at 90km/h instead of 80km/h. This may have severe consequences for the driver and the truck company if maximum speeds seem to be exceeded.

As is exemplarily illustrated in Figure 2, several patterns may be printed one after the other on a single paper roll. For example, one paper roll may include 12 patterns. Each pattern may cover a certain amount of time, e.g., 1 hour, 2 hours or 3 hours, or a certain distance, for example 50km, 100km or 200km. These are, however, only examples. A pattern may cover any other length of time or any other distance. The position of each of the different patterns on a paper roll may differ from pattern to pattern. For example, the line representing 0km/h may be at a certain distance from a lower edge of the paper. While the 0km/h line may be positioned closer to the edge in one pattern, it may positioned further away from the edge in a different pattern.

At the beginning of each pattern, the printing unit may be calibrated. In this way, the position of the graph at the beginning of a pattern is usually very accurate. However, at the end of a pattern, the paper may have shifted and the graph may be out of place. This is exemplarily illustrated in Figure 3. Figure 3 illustrates the beginning and the end of one pattern. At the beginning of the pattern, on the left side, the printed graph A2 (printed line) corresponds to the actual data A1. The printed graph A2, therefore, accurately reproduces the collected data. However, at the end of the pattern, on the right side, the printed graph A2 differs significantly from the correct actual data A1. Instead of a maximum speed of 80km/h, the graph A2 is printed indicating a maximum speed of more than 90km/h. Therefore, the printed graph A2 no longer accurately reproduces the collected data.

Generally, a certain tolerance is permissible when printing the graph. This is exemplarily illustrated in Figure 1. A first graph A in Figure 1 illustrates the correct, actual data. A tolerance of ±0.3mm is usually permitted. These tolerances are schematically illustrated by means of a second graph B (A + 0.3mm) and a third graph C (A - 0.3mm). The printed line may be printed anywhere between the second graph B and the third graph C. Such rather small deviations are allowable, as the recorded data is visualized accurately enough to reproduce the respective trip of the vehicle.

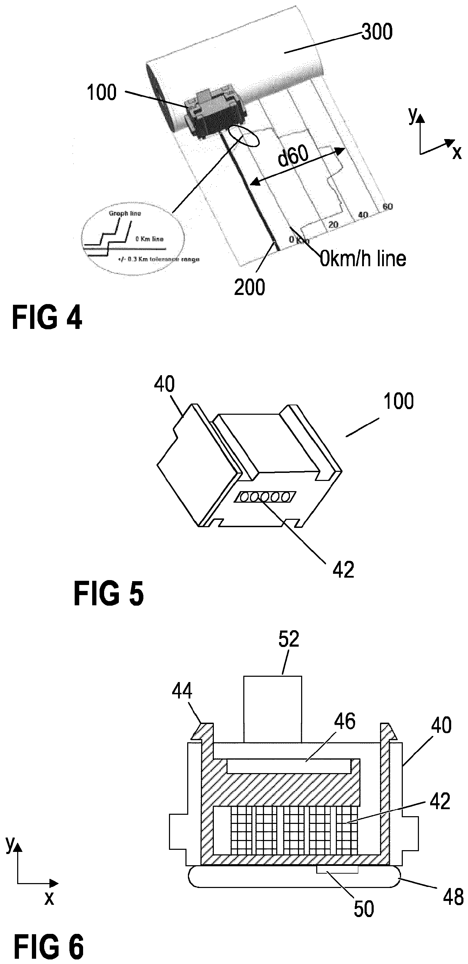

In order to comply with the allowed tolerance of ±0.3mm, a tachograph according to the present invention comprises a detection unit 100. A continuous line 200 may be pre-printed on the paper roll 300. This is exemplarily illustrated in Figure 4. The continuous line 200 may be printed between the lower edge of the paper and the 0km/h line, for example. However, it is also possible to arrange the continuous line 200 above the pattern, this is between the pattern and an upper edge of the paper (not illustrated). The detection unit 100 is configured to detect the continuous line 200 and to align the printing unit or a printer head (not illustrated in Figure 4) with the continuous line 200. For example, the continuous line may be printed at a predefined distance from the 0km/h line (or any other line or structure of the pattern). This means that if the position of the 0km/h line on the paper shifts from pattern to pattern, the position of the continuous line 200 on the paper also shifts from pattern to pattern. The detection unit 100 knows the distances between the continuous line 200 and the other lines and structures of the pattern. For example, the 60km/h line may be positioned at a distance d60 from the continuous line 200. If the graph needs to be printed on the 60km/h line, the detection unit knows that the printer head needs to be positioned at a distance d60 from where the continuous line 200 is detected.

The printing unit or printer head, therefore, are positioned in relation to the continuous line 200 on the paper roll 300. To achieve this, the detection unit 100 may comprise a lens array 42, for example. The lens array 42 may be housed in an external housing 40 of the detection unit 100. This is schematically illustrated in Figures 5 and 6. The cross section of an exemplary detection unit 100 illustrated in Figure 6 shows several further components of an exemplary detection unit 100 such as an internal housing 44, a photo array sensor 46 and a protective lens 48, for example. The detection unit 100 may further include an LED 50 (Light emitting diode) and a flexible foil 52, for example. The LED 50 is configured to illuminate the surface of the paper. As the paper roll 300 is arranged inside the external housing 40, no or only little ambient light enters the external housing 40 and illuminates the surface of the paper with the continuous line 300 printed thereon. The LED 50 provides enough light to sufficiently illuminate the surface of the paper. The light is reflected by the surface of the paper and may be detected by the photo array sensor 46. The flexible foil 52 is configured to provide an electrical connection between different components of the detection unit 100. For example, the flexible foil 52 may be configured to provide an electrical connection between the photo array sensor 46 and/or the LED 50 and/or any electronic components (not illustrated) such as a main PCB (printed circuit board) of the detection unit 100. The flexible foil 52, therefore, may comprise an electrically conducting material.

The interior housing 44 may serve to position and hold the other components in the external housing 40. An interior housing 44, however, is optional. The components may be positioned and held in the external housing 40 in any other suitable way. The lens array 42 and the photo array sensor 46 are configured to detect the continuous line 200. The lens array 42 may have a certain length in a first direction x. A width of the continuous line in the first direction x may be less than the length of the lens array 42 in the first direction x. The lens array 42 may include several separate lenses that are arranged adjacent to each other in the first direction x.

By means of the photo array sensor 46 and the lens array 42, the detection unit 100 may detect the position of the continuous line 200. The photo array sensor 46 may comprise an array of photosensing pixels which measure incident light that is reflected by the paper of the paper roll 300 and generates a voltage or a digital output which represents the light exposure of each pixel. Light will be reflected more by the (white) paper without any lines or patterns printed thereon. The continuous line 200 may be a dark, e.g., black, line which reflects less light. Therefore, those pixels of the photo array sensor 46 that are arranged directly above the continuous line 200 will be exposed to less light than those pixels of the photo array sensor 46 that are arranged above white areas of the paper. The lens array 42 may be configured to focus the light reflected by the paper and to direct the light to the photo array sensor 46. The protective lens 50 may be configured to protect the components inside the external housing 40 from contaminations. For example, dust or any other particles may be prevented from entering the external housing 40.

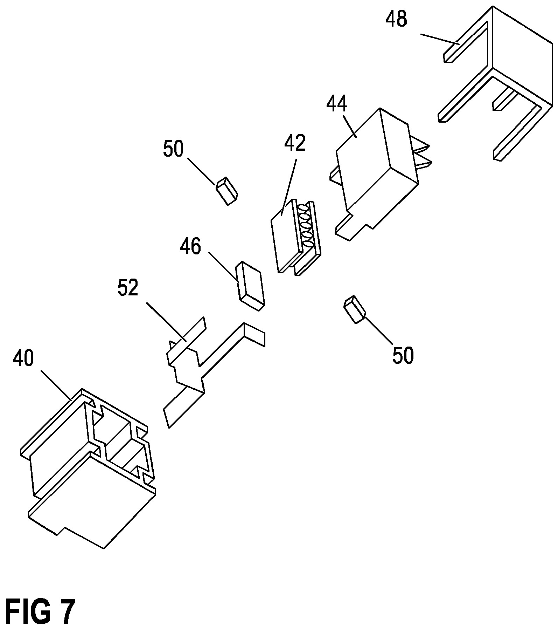

The different components are illustrated separately in the exploded view of the detection unit 100 that is illustrated in Figure 7. As can be seen in Figure 7, the detection unit 100 may comprise more than one LED 50, e.g., two LEDs. The form and design of the different components is only exemplarily illustrated. The components may have any other suitable form. Some of the components may also be omitted, such as the interior housing 44, for example. As is exemplarily illustrated in Figure 7, the protective lens may have protrusions or pins that may be inserted into respective indentations that are formed in the external housing 40. In this way the protective lens 48 may be securely fixed to the external housing 40. This, however, is only an example. The protective lens may be mounted to the external housing in any other suitable way, e.g., using screws or clamps. The protective lens 48 further prevents any components that are arranged inside the external housing 40 from falling out of the external housing 40.

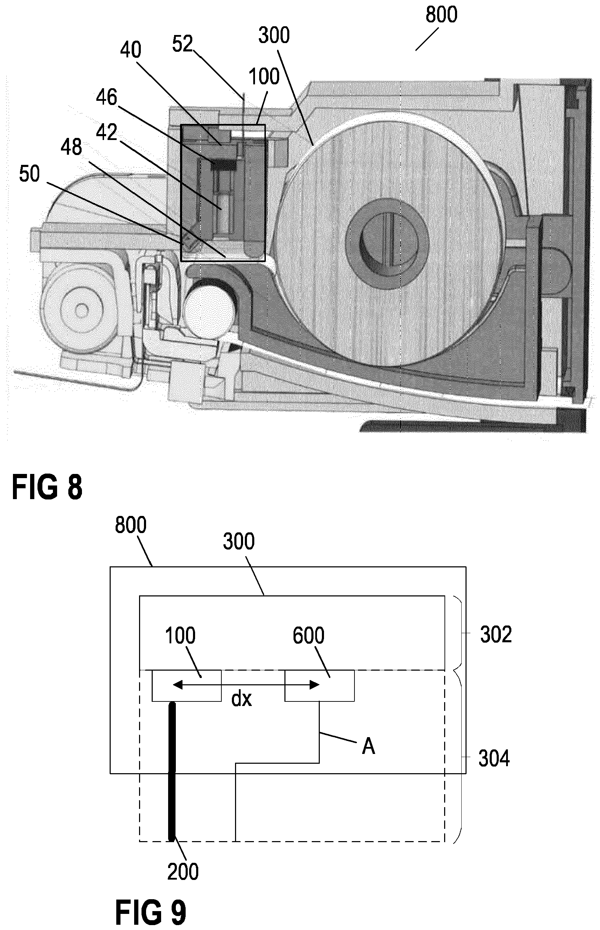

The detection unit 100 may be arranged in a tachograph 800, for example. A side view of a tachograph 800 is exemplarily illustrated in Figure 8. A paper roll 300 may be inserted in the tachograph 800. The paper of the paper roll 300 may be fed out of the tachograph 800 after printing graphs on the paper. Before protruding from the tachograph 800, the paper passes the detection unit 100. Several components of the detection unit 100 are schematically illustrated in Figure 8, such as the external housing 40, the lens array 42, the photo array sensor 46, the protective lens 48, an LED 50 and the flexible foil 52. A printing unit (not illustrated), including a printer head, for example, that is configured to print the graphs on the paper with the pre-printed patterns thereon may, for example, also be arranged in the tachograph 800. The printing unit may be positioned in the tachograph 800 in relation to the detection unit 100.

Such an arrangement is schematically illustrated in Figure 9. Figure 9 schematically illustrates a block diagram of a tachograph 800. The tachograph 800 includes a detection unit 100 and a printing unit 600. The detection unit 100 is configured to detect a continuous line 200 on the paper of a paper roll 300. The paper roll 300 comprises a first part 302 including the actual paper roll (continuous sheet of paper that is rolled up to form a paper roll) . The second part 304 of the paper roll 300 represents paper that has been unrolled/unwinded from the paper roll 300 for printing. The printing unit 600 may be arranged at a distance dx to the continuous line 200. In particular, a printer head (not illustrated) of the printing unit 600 may be arranged at a distance dx from the continuous line, such that the graph A that is to be printed on the paper is arranged at the first distance dx from the continuous line 200. The distance dx may be variable. The tachograph 800 is configured to detect at least one parameter. The at least one parameter may be stored in the tachograph 800. In this way, a graph may be printed at a later time, for example. However, it is also possible to print the parameters almost in real time without storing the parameters first. The at least one parameter may relate to vehicle data. The vehicle data may include at least one of a vehicle speed, a travelling time and a travelled distance, for example. The distance dx depends on the at least one parameter. For example, if the vehicle moved at a speed of 40km/h the distance dx is different as compared to a situation in which the vehicle moved at a speed of 80km/h. The printing unit 600 is configured to print the graph A on the paper 304 of the paper roll 300, wherein the graph A represents the at least one parameter.

In this way, a graph A may be printed, for example, which illustrates that a vehicle on which the tachograph is mounted, travelled at a certain speed at a certain time.

A method for operating a tachograph 800 comprises detecting at least one parameter (step 1001). The at least one parameter may be detected by means of one or more sensors of the tachograph 800, for example. The method further comprises detecting a continuous line 200 that is pre-printed on a paper of a paper roll 300 (step 1002). The continuous line 200 may represent a zero line on the paper that the graph is to be printed on. A graph A may be printed (step 1003) which represents the at least one parameter. The graph A is printed at a distance dx from the continuous line 200, wherein the distance (dx) depends on the at least one parameter. While printing the graph A, the continuous line 200 may be constantly detected. In this way, the graph A may be printed within the permitted tolerances.

## Claims

1. A tachograph (800) comprising a detection unit (100) and a printing unit (600), wherein
the tachograph (800) is configured to detect at least one parameter;
the detection unit (100) is configured to detect a continuous line (200) that is pre-printed on a paper of a paper roll (300) ;
the printing unit (600) is configured to print a graph (A) representing the at least one parameter; and
the printing unit (600) is configured to print the graph (A) at a distance (dx) from the continuous line (200), wherein the distance (dx) depends on the at least one parameter.

2. The tachograph (800) of claim 1, wherein the tachograph (800) is configured to be mounted on a vehicle, and wherein the at least one parameter relates to vehicle data.

3. The tachograph (800) of claim 2, wherein the vehicle data comprises at least one of
a vehicle speed;
a travelled distance; and
a travelling time.

4. The tachograph (800) of any of claims 1 to 3, wherein the detection unit (100) comprises an external housing (40).

5. The tachograph (800) of claim 4, wherein the detection unit (100) further comprises a photo array sensor (46) arranged within the external housing (40), wherein the photo array sensor (46) is configured to detect light that is reflected by the paper and the continuous line (200) printed thereon.

6. The tachograph (800) of claim 5, wherein the detection unit (100) further comprises a lens array (42), and wherein
the lens array (42), is arranged in the external housing (40) ;
when a paper roll (300) with a continuous line (200) printed thereon is inserted in the tachograph (800), the lens array (42), is arranged between the continuous line (200) and the photo array sensor (46); and
the lens array (42) is configured to focus the light that is reflected by the paper and the continuous line (200) printed thereon.

7. The tachograph (800) of any of claims 4 to 6, wherein the detection unit (100) further comprises at least one LED (50) arranged in the external housing (40), wherein the at least one LED (50) is configured to provide light that is reflected by the paper and the continuous line (200).

8. The tachograph (800) of any of claims 4 to 7, wherein the detection unit (100) further comprises a protective lens (48) arranged at one side of the external housing (40) and configured to protect the inside of the external housing (40) from contaminations.

9. The tachograph (800) of any of claims 4 to 8, wherein the detection unit (100) further comprises a flexible foil (52), wherein the flexible foil (52) is configured to provide an electrical connection between different components of the detection unit (100).

10. Method for operating a tachograph (800), the method comprising
detecting at least one parameter;
detecting a continuous line (200) that is pre-printed on a paper of a paper roll (300); and
printing a graph (A) representing the at least one parameter, wherein the graph (A) is printed at a distance (dx) from the continuous line (200), wherein the distance (dx) depends on the at least one parameter.
